# EUROPÄISCHE PATENTSCHRIFT

(11) **EP 1 127 782 B1**
(45) Veröffentlichungstag und Bekanntmachung des Hinweises auf die Patenterteilung: **29.06.2005**
(21) Anmeldenummer: 01104232.2
(22) Anmeldetag: 22.02.2001
(51) Int. Cl.: B62M 25/04

(54) **Gangwahleinrichtung für ein Schaltgetriebe, insbesondere für einen Fahrradantrieb**
Shift selection device in particular for bicycle transmission
Dispositif de sélection de vitesse, notamment pour transmission de bicyclette

(30) Priorität: 26.02.2000 DE 10009214
(43) Veröffentlichungstag der Anmeldung: 29.08.2001
(73) Patentinhaber: SRAM Deutschland GmbH, 97404 Schweinfurt (DE)
(72) Erfinder: Auer, Marcus, 97525 Schwebheim (DE); Assel, Martin, 97072 Würzburg (DE)

(56) Entgegenhaltungen:
- EP-A- 0 552 775
- EP-A- 0 669 249
- DE-A- 3 215 427
- US-A- 2 905 017
- US-A- 3 499 346
- US-A- 3 524 979
- US-A- 5 178 033

## Beschreibung

Die Erfindung betrifft eine Gangwahleinrichtung für ein Schaltgetriebe, insbesondere für einen Fahrradantrieb, gemäß dem Oberbegriff des Anspruchs 1.

Fahrräder - sowohl für den alltäglichen als auch für den sportlichen Einsatz - werden heute durchweg mit Übersetzungen ausgestattet, die mehrere bis eine Vielzahl von Übersetzungsstufen aufweisen, um dem Fahrer eine für jeden körperlichen Leistungsstand, für jede Geschwindigkeit und für jedes Gelände optimale Einstellung von Leistung und Trittfrequenz zu ermöglichen.

Zu diesem Zweck werden Vorrichtungen zum Wechseln der Antriebsübersetzung, wie beispielsweise Nabengetriebe oder Kettenwechsler, am Fahrrad im Bereich der Kraftübertragung zum Hinterrad bzw. im Bereich des Pedalantriebs angeordnet.

Aus Gründen der Ergonomie, der Sicherheit und der leichten Bedienbarkeit werden die Betätigungsvorrichtungen, mit denen der Fahrer die gewünschte Übersetzung wählt, heute vielfach im Bereich des Fahrradlenkers oder am Lenker selbst angebracht. Es kommen hierfür beispielsweise sog. Drehgriff- oder Daumenschalter zum Einsatz.

Für eine optimale Ergonomie des Fahrradantriebs ist eine möglichst hohe Anzahl an unterschiedlichen Übersetzungsstufen wünschenswert. Moderne Schaltungstechnik ermöglicht diesbezügliche Gangzahlen von 3, 5, 7, 16, 24 und mehr Übersetzungsstufen. Um dem Fahrradfahrer trotz der vielen unterschiedlichen wählbaren Übersetzungen effektive Kontrolle, Steuerung und Identifizierung der eingelegten Gangübersetzung zu ermöglichen, sind ergonomisch hochentwickelte Betätigungseinrichtungen für den Gangwechsel am Fahrrad unabdingbar.

Anforderungen an eine moderne Betätigungseinrichtung für ein Fahrradgetriebe umfassen beispielsweise, jedoch keineswegs ausschließlich, neben der leichtgängigen Bedienbarkeit eine ergonomische Anordnung am Fahrrad, ein auf die Bewegungsvorgänge von Hand und Fingern abgestimmtes Design, die Verwendung von widerstandsfähigen und gleichzeitig ansprechenden und griffigen Materialoberflächen für das Betätigungselement, sowie die insbesondere bei höheren Gangzahlen wichtige deutliche Visualisierung der momentan eingelegten Übersetzungsstufe.

Die Anforderungen an die Ganganzeige umfassen darüber hinaus die vom Fahrer intuitiv zu erfassende Darstellung der eingelegten Übersetzung im Verhältnis zum gesamten zur Verfügung stehenden Übersetzungsbereich. Dies erfordert, dass dem Fahrer nicht nur der momentan jeweils eingelegte Gang angezeigt wird, sondern dass zumindest ebenfalls die jeweils benachbarten Gänge, sowie der noch bis zum oberen bzw. unteren Ende des Übersetzungsbereichs zur Verfügung stehende Gangwahlbereich angezeigt wird.

In vielen Fällen erfüllt diese Aufgabe heute beispielsweise eine erhabene Markierung oder eine Farbmarkierung, welche am manuell bewegbaren Betätigungselement der Gangwahleinrichtung angebracht ist, in der Form, dass die jeweilige Stellung dieser Markierung gegenüber einer relativ zum Gehäuse der Betätigungseinrichtung feststehenden Ganganzeigeskala dem Fahrer den jeweils eingelegten Gang anzeigt.

Nachteilig an diesen bekannten Anzeigevorrichtungen an Gangwahleinrichtungen für Fahrradschaltgetriebe, insbesondere im Fall der zunehmend gebräuchlichen hohen Zahl an Übersetzungsstufen, ist jedoch, dass sich die Markierung oder das Indikatorelement, das den eingelegten Gang anzeigt, aufgrund der mit einer hohen Ganganzahl verbundenen insgesamt großen Betätigungswege der Betätigungseinrichtung nicht immer in dem für eine optimale und ergonomische Ablesbarkeit erforderlichen Sichtwinkel des Fahrradfahrers befindet.

Besonders, jedoch nicht ausschließlich, betrifft der geschilderte Nachteil der zumindest teilweise schlechten Ablesbarkeit die Ganganzeigeeinrichtungen der an vielen Fahrrädern für den alltäglichen oder sportlichen Einsatz gebräuchlichen sog. Drehgriffschalter. Bei solchen Drehgriffschaltern ist zumindest ein Teil des jeweiligen Handgriffs am Fahrradlenker in geeigneter Weise im wesentlichen um die Achse des Lenkerendes drehbar angeordnet dergestalt, dass durch definierte Drehbewegungen mit Hand oder Handgelenk, über eine geeignete Steuereinrichtung sowie über eine Übertragungseinrichtung zur Übertragung der Steuerbewegung zum Schaltgetriebe, der gewünschte Gang eingelegt werden kann.

Aus Gründen der Leichtgängigkeit der Gangwahlvorrichtung, der Positioniergenauigkeit beim Wechseln der Übersetzung und der Ergonomie ist der Gesamtdrehwinkel des Betätigungselements, insbesondere bei Gangschaltungen mit einer Vielzahl von unterschiedlichen Übersetzungen, heute oftmals so groß, dass die Markierung bzw. das Indikatorelement, auch in Abhängigkeit von Sitzposition und Blickrichtung des Fahrers, sich im Extremfall aus dem Blickwinkel des Fahrers hinausbewegen kann bzw. sich zumindest ein an einem oder beiden Enden der Gangskala ungünstiger Ablesewinkel ergibt.

Weiterhin sind Anzeigeeinrichtungen von Schaltvorrichtungen für Fahrradschaltgetriebe bekannt, bei denen der jeweils eingelegte Gang dem Fahrer in graphischer oder numerischer Form in einem im Verhältnis zur Schaltvorrichtung stillstehenden Anzeigefenster visualisiert wird. Derartige Anzeigeeinrichtungen vermeiden den geschilderten Nachteil der teilweise schlechten Einsehbarkeit der Gangskala, erfüllen jedoch nicht den aus den Erfordernissen der visuellen Ergonomie herrührenden Anspruch, über die reine Anzeige der Gangposition hinaus auch die relative Lage des jeweils eingelegten Gangs innerhalb des gesamten Übersetzungsbereichs zu visualisieren (vgl. Eigenschaften der analogen vs. der digitalen Messwert- oder beispielsweise Zeitanzeige).

Im Dokument US 3,499,346 ist eine Gangwahleinrichtung für ein Fahrrad entsprechend des Oberbegriffes von Anspruch 1 gezeigt, das eine Anzeigeeinrichtung aufweist. Der Betätigungshebel und die Aufwickeleinrichtung zum Einholen des Betätigungskabels befinden sich in einer senkrechten, zur Fahrradebene parallelen Ebene. Der Zeiger der Anzeigeeinrichtung bewegt sich in einer Ebene, die sich senkrecht zur genannten Ebene für die Hebelbewegung erstreckt.
Zwischen der Aufwickeleinrichtung und der Anzeigeeinrichtung befindet sich ein Getriebe, das neben einer Stirnradstufe eine biegsame Welle aufweist. Mit diesen Elementen ist möglich, die Aufwickeleinrichtung und die Anzeigeeinrichtung, die in nicht parallelen Ebenen angeordnet sind, funktionsmäßig zu verbinden und die Drehbewegung der Aufwickeleinrichtung umzuformen und auf die Anzeigeeinrichtung zu übertragen. Der Zeiger der Anzeigeeinrichtung überstreicht bei der Bewegung zwischen den Endpositionen einen größeren Winkel als die Wickelspule der Aufwickeleinrichtung zum Aufwickeln des Seilzuges. Die Anzahl der zur Anzeige gebrachten Gangstufen ist daher begrenzt.

In der Offenlegungsschrift DE 3215427 ist eine Gangwahleinrichtung für ein Fahrrad mit einer Übersetzungseinrichtung zwischen Betätigungsgriff und Aufwickeleinrichtung gezeigt. Die gewählte Gangposition wird in einem Anzeigefenster angezeigt, das gemeinsam mit dem Betätigungsgriff gegenüber dem Gehäuse der Gangwahleinrichtung bzw. gegenüber dem Lenkerrohr gedreht wird.

Aufgabe der vorliegenden Erfindung ist es daher, eine gattungsgemäße Gangwahleinrichtung zu schaffen, die auch bei einer großen Zahl von unterschiedlichen Gangübersetzungsstufen und dem damit verbundenen großen Gesamtbetätigungswinkel der Betätigungseinrichtung sowohl die Anforderung der deutlichen Anzeige des momentan eingelegten Ganges als auch den Anspruch der Darstellung des gesamten zur Verfügung stehenden Übersetzungsbereichs, sowohl absolut als auch in Relation zum eingelegten Gang, erfüllt; und mit der darüber hinaus die Einhaltung des aus visuell-ergonomischen Gründen erforderlichen maximalen Skalenwinkels bzw. Anzeigekreisbogens gewährleistet werden kann.

Diese Aufgabe wird durch eine Gangwahleinrichtung nach der Lehre des Patentanspruchs 1 gelöst.

Erfindungsgemäß weist diese Gangwahleinrichtung eine Übersetzungsvorrichtung auf, welche die Winkelbewegungen der Betätigungseinrichtung oder der von der Betätigungseinrichtung angetriebenen Steuereinrichtung dergestalt auf die Anzeigeeinrichtung überträgt, dass der Kreisbogen, den das Indikatorelement bzw. die Markierung der Anzeigeeinrichtung jeweils durchläuft, kleiner ist als der gleichzeitig vom Betätigungselement der Betätigungseinrichtung durchlaufene Kreisbogen. Dies bedeutet, dass selbst bei konstruktiv sehr großen Gesamtbetätigungswinkeln der Betätigungseinrichtung die Anzeigeeinrichtung so gestaltet werden kann, dass der aus ergonomischen Gründen auf eine gewisse Größe zu beschränkende Anzeigewinkel der Anzeigeeinrichtung bzw. die auf ein gewisses Maß zu beschränkende Länge des Kreisbogens, auf dem die Anzeigeskala des gesamten Übersetzungsbereichs anzubringen ist, ermöglicht wird.

Nach einer besonders vorteilhaften Ausführungsform der Gangwahleinrichtung ist die zwischen Betätigungseinrichtung oder Steuereinrichtung und Anzeigeeinrichtung angeordnete Übersetzungsvorrichtung als Getriebe, insbesondere als Zahnradgetriebe, ausgebildet. Aufgrund der Formschlüssigkeit des Zahnradgetriebes lässt sich mit dieser Ausführungsform vorteilhaft ein gleichförmiges Übersetzungsverhältnis zwischen Steuereinrichtung und Anzeigeeinrichtung erzielen, sowie die für eindeutige Zuordnung der jeweiligen Anzeige zum jeweils eingelegten Gang notwendige, je Gangstufe relativ zueinander unveränderliche Position von Steuereinrichtung und Anzeigeeinrichtung gewährleisten.

Gemäß einer weiteren besonders bevorzugten Ausführungsform der Erfindung ist die zwischen Betätigungs- bzw. Steuerelement und Anzeigeeinrichtung angeordnete Übersetzungsvorrichtung als Planetengetriebe ausgebildet, und weist jeweils zumindest eine Sonnenradeinrichtung, eine Planetenradeinrichtung und eine Hohlradeinrichtung auf. Hierbei soll jede Radeinrichtung zumindest jeweils ein Zahnrad oder ein Zahnradsegment umfassen.

Vorteile eines Planetengetriebes sind an dieser Stelle beispielsweise, jedoch keineswegs ausschließlich, der relativ geringe Platzbedarf, die konstruktive Möglichkeit, ohne zusätzliche Bauteile das Übersetzungsverhältnis des Getriebes innerhalb weit gesteckter Grenzen variieren zu können, und die Möglichkeit, auf einfache Art und Weise eine Bewegungs- bzw. Drehrichtungsumkehr zu erzielen.

Wenn die Anzeigeeinrichtung der Gangwahleinrichtung ein separates Anzeige- oder Indikatorelement aufweist, das beispielsweise als rotatorisch bewegbarer Zeiger ausgebildet sein kann, dessen Zeigebereich entlang einer Ganganzeigeskala angeordnet ist, lässt sich die gewünschte, je Gangwechsel vom Zeiger auszuführende Winkelbewegung vorteilhaft dadurch erzielen, dass das Zeigerelement der Anzeigeeinrichtung über eine Planetenradeinrichtung des Planetengetriebes angetrieben wird.

Besonders vorteilhaft im Sinne einer einfachen, störungsunanfälligen und platzsparenden Konstruktion der Gangwahleinrichtung mit nur wenigen separaten Bauteilen ist eine Ausführungsform der Erfindung, bei der das Indikatorelement der Anzeigeeinrichtung in Identität mit einer Planetenradeinrichtung durch diese Planetenradeinrichtung gebildet wird, oder bei der ein Fortsatz, ein Absatz oder eine Achse einer Planetenradeinrichtung dieses Indikatorelement bildet.

Im Sinne einer platzsparenden Konstruktion mit nur wenigen Bauteilen ist es weiterhin vorteilhaft, wenn eine Lagerung der genannten Planetenradeinrichtung in der axialen Richtung dadurch gebildet wird, dass die Planetenradeinrichtung zumindest eine an ihrer Stirnseite angeordnete kreisförmige oder kreisringförmige Lagerfläche aufweist, welche an einer relativ zum Gehäuse der Gangwahleinrichtung stillstehenden, senkrecht zur Drehachse der Planetenradeinrichtung verlaufenden, im wesentlichen kreisringsegmentförmigen Lagerfläche zur Anlage bringbar ist.

Eine Lagerung der Planetenradeinrichtung in radialer Richtung lässt sich in ähnlicher Weise vorteilhaft dadurch erzielen, dass zumindest ein zylinderförmiger Absatz, Fortsatz oder eine Achse einer Planetenradeinrichtung auf zumindest einer zylindersegment- oder hohlzylindersegmentförmigen Lagerfläche abrollbar ist, und auf diese Weise Position und Lage der Planetenradeinrichtung nach radial innen oder radial außen festgelegt ist.

Weitere Gestaltungsmöglichkeiten für die Anzeigeeinrichtung der Gangwahleinrichtung ergeben sich, wenn gemäß einer alternativen Ausführungsform der Erfindung das Indikatorelement der Anzeigeeinrichtung durch eine Hohlradeinrichtung angetrieben wird oder das Indikatorelement durch eine Hohlradeinrichtung bzw. durch eine an oder auf der Hohlradeinrichtung angebrachte Markierung gebildet wird.

Eine besonders große Freiheit in der konstruktiven und ergonomischen Gestaltung sowie im Design einer Gangwahleinrichtung ergibt sich, wenn Getriebebestandteile des Planetengetriebes, also Sonnenradeinrichtung, Planetenradeinrichtung oder Hohlradeinrichtung so angeordnet werden, dass zumindest zwei der Drehachsen der Bestandteile des Planetengetriebes nicht parallel verlaufen.

Diese vorteilhafte Ausführungsform der Erfindung wird dadurch ermöglicht, dass Sonnenradeinrichtung, Planetenradeinrichtung und/oder Hohlradeinrichtung mit einer Schrägverzahnung, einer schraubenförmigen Verzahnung oder einer schneckenartigen Verzahnung ausgestattet werden. Aufgrund der durch eine solche Bauweise erzielten größeren Freiheit bezüglich Anordnung und Ausrichtung der Anzeigeeinrichtung oder der Ganganzeigeskala sowie bezüglich der Bewegungsrichtung des Indikatorelements lässt sich eine weiter verbesserte visuelle und haptische Ergonomie einer erfindungsgemäßen Gangwahleinrichtung erzielen.

Weiterhin ist es möglich, dass die zwischen Betätigungs- oder Steuerelement und Anzeigeeinrichtung angeordnete Übersetzungsvorrichtung in Form eines Stirnradgetriebes ausgebildet ist, welches, um die gewünschte Untersetzung zu erzielen, zumindest ein Stufenzahnrad oder Stufenzahnradsegment aufweist. Ebenfalls kann das Indikatorelement der Anzeigevorrichtung vorteilhaft durch ein hohlzylinderförmiges oder hohlzylindersegmentförmiges Bauteil mit zumindest an Teilen der Stirnseite des hohlzylinderförmigen oder hohlzylindersegmentförmigen Bauteils angebrachter Verzahnung oder durch ein Stirnzahnrad oder Stirnzahnradsegment bzw. durch eine am hohlzylinderförmigen bzw. hohlzylindersegmentförmigen Bauteil oder am Stirnzahnrad bzw. Stirnzahnradsegment angebrachte Markierung gebildet werden.

Eine besonders robuste, störungsarme und platzsparende Bauweise einer erfindungsgemäßen Gangwahleinrichtung wird ermöglicht, indem gemäß einer weiteren Ausführungsform der Erfindung das genannte hohlzylinderförmige oder hohlzylindersegmentförmige Bauteil, welches das Indikatorelement der Anzeigeeinrichtung trägt oder bildet, in einer der Gestalt des Indikatorelements entsprechenden hohlzylinderförmigen oder hohlzylindersegmentförmigen Nut, die beispielsweise im Gehäuse der Gangwahleinrichtung angeordnet ist, gelagert wird.

Eine aus ergonomischen sowie gestalterischen Gesichtspunkten besonders vorteilhafte Anordnung der Anzeigeeinrichtung ergibt sich, wenn entsprechend einer weiteren Ausführungsform der Erfindung das Indikatorelement der Anzeigeeinrichtung in einem zylinderförmigen, hohlzylinderförmigen oder hohlzylindersegmentförmigen Bereich, welcher ähnlich einer Bandage konzentrisch zum Lenker des Fahrrads verläuft, anordenbar ist.

Nachfolgend wird die Erfindung anhand von lediglich Ausführungsbeispielen darstellender Zeichnungen erläutert. Es zeigen:
- Fig. 1:: eine Explosionsdarstellung einer Gangwahleinrichtung in Form eines am Fahrradlenker anbringbaren Drehgriffschalters, unter Angabe der Blickrichtung des Fahrers;
- Fig. 2:: Steuereinrichtung, Übersetzungsvorrichtung sowie Anzeigeeinrichtung der Gangwahleinrichtung gemäß Fig. 1 in einer Zusammenbauzeichnung;
- Fig. 3:: Steuereinrichtung, Übersetzungsvorrichtung sowie Indikatorelement der Anzeigeeinrichtung gemäß einer alternativen Ausführungsform der Erfindung, bei welcher die Übersetzungsvorrichtung als Stirnradgetriebe ausgebildet ist.

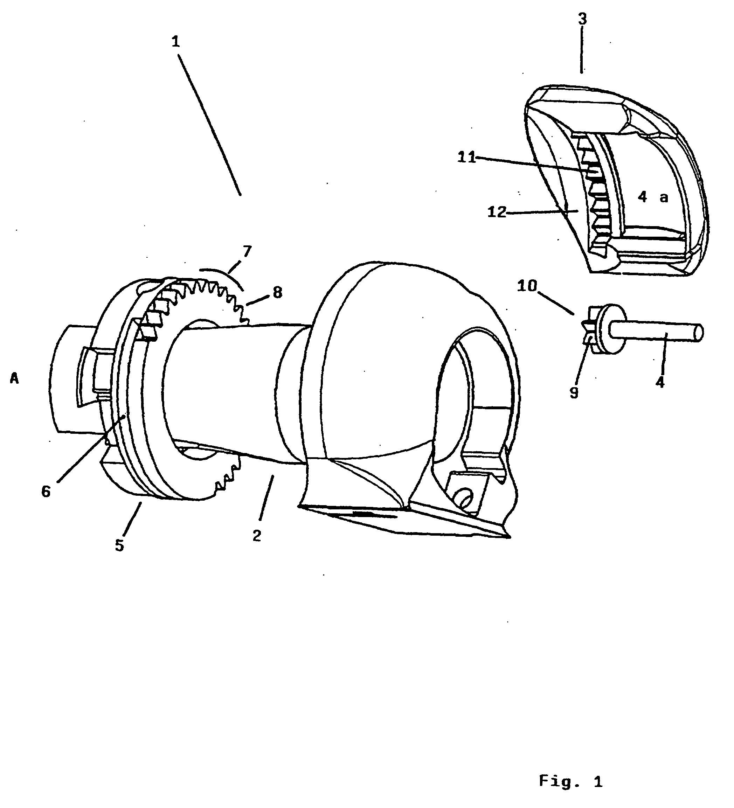

Man erkennt in **Fig. 1** eine Gangwahleinrichtung 1, umfassend ein am Fahrradlenker befestigbares Gehäuse 2, eine Anzeigeeinrichtung 3 mit einem Indikatorelement 4 und dem zugehörigen Anzeigefenster 4a sowie eine Steuereinrichtung 5 mit einer Nut 6, in der ein nicht gezeigtes Kraftübertragungselement, welches die Steuerbewegung zum Schaltgetriebe überträgt, beispielsweise das Kabel eines Bowdenzuges, befestigbar und führbar ist.

Aus Gründen der Übersichtlichkeit ist die im Bereich A angeordnete Betätigungseinrichtung mit dem Betätigungselement, das beispielsweise als elastomerbeschichteter Drehgriff ausgebildet sein kann, in **Fig. 1** nicht dargestellt.

Die erfindungsgemäße Übersetzungsvorrichtung zur Übertragung der Winkelbewegungen der Betätigungseinrichtung über die Steuereinrichtung 5 auf die Anzeigeeinrichtung 3 umfasst eine als Sonnenradsegment 7 ausgebildete an der Steuereinrichtung 5 angeordnete Sonnenradeinrichtung 8, eine als Planetenzahnrad 9 ausgebildete Planetenradeinrichtung 10 sowie eine als Hohlradsegment 11 ausgebildete Hohlradeinrichtung 12.

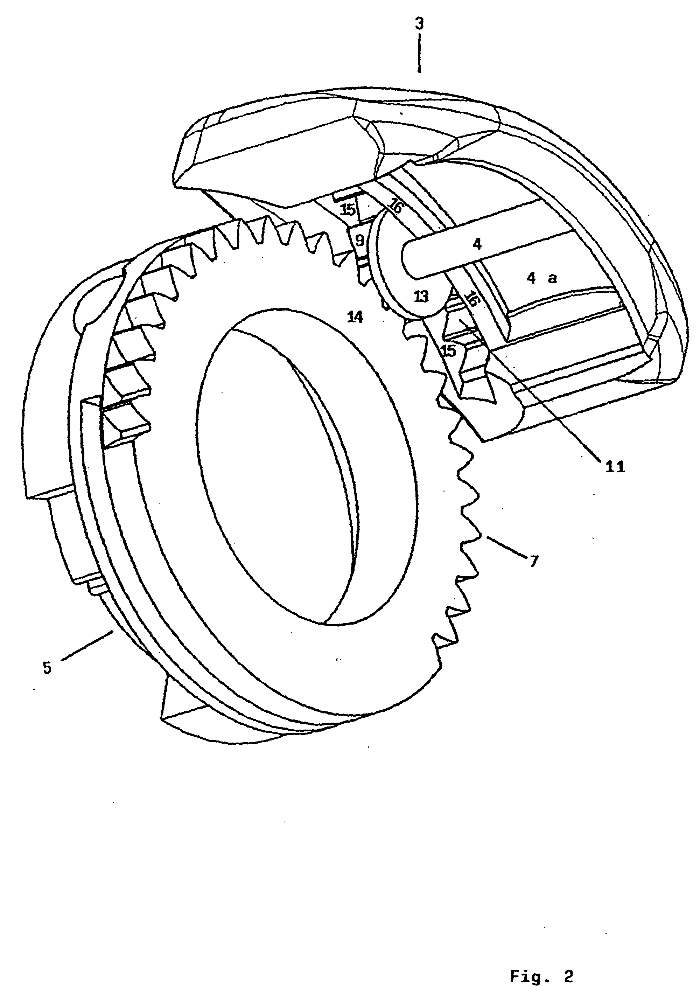

**Fig. 2** zeigt in vergrößerter Ansicht den Zusammenbau der Übersetzungsvorrichtung der Gangwahleinrichtung 1 gemäß Fig. 1, umfassend das an der Steuereinrichtung 5 befindliche Sonnenradsegment 7, das Planetenzahnrad 9 sowie das Hohlradsegment 11**.** Ferner erkennt man in **Fig. 2** die Anzeigeeinrichtung 3, umfassend das Indikatorelement 4 sowie das Anzeigefenster 4a, durch das das Indikatorelement 4 zur Anzeige der jeweils eingelegten Übersetzungsstufe bewegbar ist. Das Indikatorelement 4 wandert entsprechend der von der Betätigungseinrichtung bzw. der Steuereinrichtung 5 über die Übertragungsvorrichtung auf die Anzeigeeinrichtung 3 übertragenen Bewegung entlang einer Ganganzeigeskala, welche sich in **Fig. 2** nicht sichtbar auf der der Blickrichtung des Fahrers zugewandten Seite der Anzeigeeinrichtung 3 befindet.

In der gezeigten Ausführungsform der Erfindung ist das Planetenzahnrad 9 mit seiner das Indikatorelement 4 der Anzeigeeinrichtung 3 bildenden Achse 4 insbesondere nicht in einem separaten Planetenradträger gelagert. Vielmehr bilden mehrere stirnseitig am Planetenzahnrad 9 angeordnete kreisförmige bzw. kreisringförmige Lagerflächen, von denen in **Fig. 2** insbesondere die kreisringförmige Lagerfläche 13 erkennbar ist, zusammen mit mehreren korrespondierenden kreisringförmigen bzw. kreisringsegmentförmigen Lagerflächen, von denen in **Fig. 2** insbesondere die am Sonnenradsegment 7 befindliche kreisringförmige Lagerfläche 14 sowie die am Gehäuse 2 der Gangwahleinrichtung 1 oder an der Anzeigeeinrichtung 3 angeordnete kreisringsegmentförmige Lagerfläche 15 erkennbar ist, eine Lagerung des Planetenzahnrads 9 mit seiner das Indikatorelement 4 der Anzeigeeinrichtung 3 bildenden Achse 4 in axialer Richtung.

In ähnlicher Weise - ohne separaten Planetenradträger - bilden mehrere am Planetenzahnrad 9 angeordnete, zur Achse des Planetenzahnrads 9 achsenparallele zylinderförmige Absätze, bzw. die das Indikatorelement 4 der Anzeigeeinrichtung 3 bildende Achse 4 des Planetenzahnrads 9, zusammen mit mehreren hier hohlzylindersegmentförmigen Lagerflächen, von denen in **Fig. 2** insbesondere die hohlzylindersegmentförmige Lagerfläche 16 erkennbar ist, neben der Verzahnung des Hohlradsegments 11, die Lagerung des Planetenzahnrads 9 mit seiner das Indikatorelement 4 bildenden Achse in radialer Richtung, hier nach radial außen, indem die zylinderförmigen Absätze auf den hohlzylindersegmentförmigen Lagerflächen abwälzbar sind; bzw. indem das Planetenzahnrad 9 auf der Verzahnung des Hohlradsegments 11 abwälzbar ist.

Nach radial innen wird die Lagerung des Planetenzahnrads 9 gebildet durch die Verzahnung des Sonnenradsegments 7, auf der das Planetenzahnrad 9 abwälzbar ist.

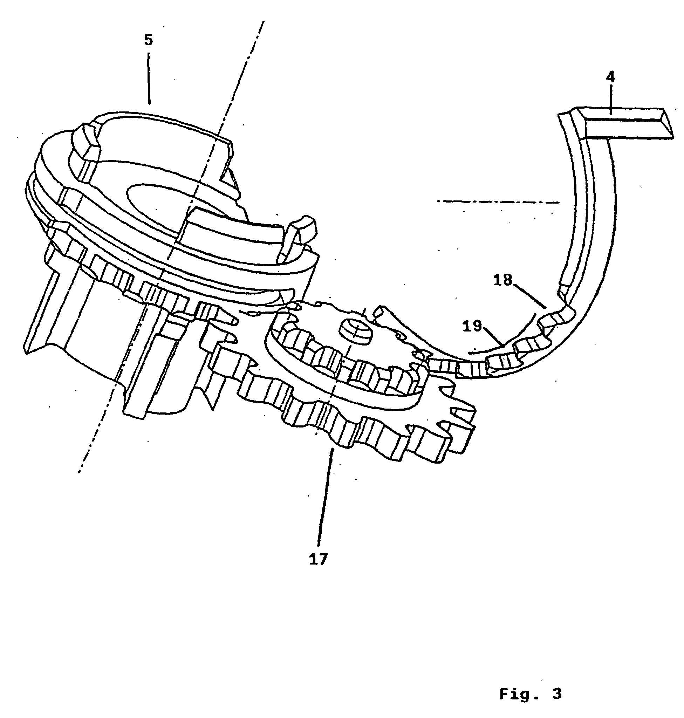

In **Fig. 3** erkennt man eine Übersetzungsvorrichtung einer Gangwahleinrichtung 1 gemäß einer alternativen Ausführungsform der Erfindung, nach der die Übersetzung der Winkelbewegungen von einer Betätigungseinrichtung oder von einer Steuereinrichtung 5 auf das Indikatorelement 4 der Anzeigeeinrichtung über ein Stirnradgetriebe übertragen werden, das für die zu erzielende Untersetzung ein im Gehäuse der Gangwahleinrichtung 1 gelagertes Stufenzahnrad 17 aufweist. Diese Ausführungsform der Erfindung kommt beispielsweise zum Einsatz in einer Gangwahleinrichtung, welche nach Art eines Daumen- oder Fingerschalters ausgebildet ist.

Das Indikatorelement 4 bildet in dieser Ausführungsform der Erfindung eine Einheit mit dem hohlzylindersegmentförmigen Bauteil 18, welches vom Stufenzahnrad 17 über eine stirnseitig am hohlzylindersegmentförmigen Bauteil 18 angebrachte Verzahnung 19 angetrieben wird. Das hohlzylindersegmentförmige Bauteil 18 kann hierbei, in vorteilhafter Weise ergonomisch, robust und platzsparend in einem nach Art einer Bandage konzentrisch um den Lenker des Fahrrads verlaufenden Nut (6) im Gehäuse der Gangwahleinrichtung 1 angeordnet werden.

### Bezugszeichenliste

- 1.: Gangwahleinrichtung
- 2.: Gehäuse
- 3.: Anzeigeeinrichtung
- 4.: Indikatorelement
- 4a.: Anzeigefenster
- 5.: Steuereinrichtung
- 6.: Nut
- 7.: Sonnenradsegment
- 8.: Sonnenradeinrichtung
- 9.: Planetenzahnrad
- 10.: Planetenradeinrichtung
- 11.: Hohlradsegment
- 12.: Hohlradeinrichtung
- 13.: Lagerfläche
- 14.: Lagerfläche
- 15.: Lagerfläche
- 16.: Lagerfläche
- 17.: Stufenzahnrad
- 18.: hohlzylinderförmiges Bauteil
- 19.: Verzahnung

## Patentansprüche

1. Gangwahleinrichtung für ein Schaltgetriebe, insbesondere für einen Fahrradantrieb, mit einer Steuereinrichtung, die über ein Kraftübertragungselement auf das Schaltgetriebe wirkt, einer Betätigungseinrichtung zur manuellen Betätigung der Steuereinrichtung, und einer Anzeigeeinrichtung mit einem entlang einem Kreisbogen bewegbaren Indikatorelement zur Anzeige des mittels der Betätigungseinrichtung gewählten Schaltzustands,
wobei die Winkelbewegungen von der Betätigungseinrichtung oder der Steuereinrichtung (5) über eine Übersetzungsvorrichtung auf die Anzeigeeinrichtung (3) übertragen werden
**dadurch gekennzeichnet, dass** das Indikatorelement (4) der Anzeigevorrichtung (3) eine Verzahnung (9,19) aufweist, die entweder selber zusammen mit einem Zahnrad der Steuerungseinrichtung (5) die Übersetzungsvorrichtung bildet, oder in eine Verzahnung der Übersetzungsvorrichtung eingreift, so
**dass** der vom Indikatorelement (4) der Anzeigeeinrichtung (3) jeweils durchlaufene Kreisbogen gegenüber einem zylinderförmigen, hohlzylinderförmigen oder hohlzylindersegmentförmigen Gehäuseteil der Gangwahleinrichtung kleiner ist als der gleichzeitig vom Betätigungselement der Betätigungseinrichtung oder der Steuereinrichtung (5) durchlaufene Kreisbogen.

2. Gangwahleinrichtung nach Anspruch 1,
**dadurch gekennzeichnet,**
**dass** die Übersetzungsvorrichtung als Zahnradgetriebe ausgebildet ist.

3. Gangwahleinrichtung nach Anspruch 1 oder 2,
**dadurch gekennzeichnet,**
**dass** die Übersetzungsvorrichtung als Planetengetriebe ausgebildet ist und zumindest eine Sonnenradeinrichtung (8), zumindest eine Planetenradeinrichtung (10) und zumindest eine Hohlradeinrichtung (12) aufweist, jede Radeinrichtung umfassend zumindest jeweils ein Zahnrad oder ein Zahnradsegment.

4. Gangwahleinrichtung nach einem oder mehreren der Ansprüche 1 bis 3,
**dadurch gekennzeichnet,**
**dass** die Anzeigeeinrichtung (3) über eine Planetenradeinrichtung (10) des Planetengetriebes angetrieben wird.

5. Gangwahleinrichtung nach einem oder mehreren der Ansprüche 1 bis 3,
**dadurch gekennzeichnet,**
**dass** das Indikatorelement (4) der Anzeigeeinrichtung (3) durch eine Planetenradeinrichtung (10) oder durch einen Fortsatz oder eine Achse einer Planetenradeinrichtung (10) gebildet wird.

6. Gangwahleinrichtung nach einem oder mehreren der Ansprüche 1 bis 5,
**dadurch gekennzeichnet,**
**dass** zumindest eine stirnseitig an einer Planetenradeinrichtung (10) angeordnete Lagerfläche (13) an zumindest einer senkrecht zur Drehachse der Planetenradeinrichtung (10) verlaufenden, im wesentlichen kreisringsegmentförmigen Lagerfläche zur Anlage bringbar ist, wobei eine stirnseitige Lagerfläche (13) zusammen mit einer kreisringsegmentförmigen Lagerfläche eine Lagerung der Planetenradeinrichtung (10) in axialer Richtung bildet.

7. Gangwahleinrichtung nach einem oder mehreren der Ansprüche 1 bis 6,
**dadurch gekennzeichnet,**
**dass** zumindest ein zylinderförmiger Absatz oder Fortsatz oder eine Achse (4) einer Planetenradeinrichtung (10) auf zumindest einer hohlzylindersegmentförmigen Lagerfläche (16) abrollbar ist und zusammen mit der hohlzylindersegmentförmigen Lagerfläche (16) eine Lagerung der Planetenradeinrichtung (10) in radialer Richtung bildet.

8. Gangwahleinrichtung nach einem oder mehreren der Ansprüche 1 bis 4,
**dadurch gekennzeichnet,**
**dass** das Indikatorelement (4) durch eine Hohlradeinrichtung (12) angetrieben oder durch eine Hohlradeinrichtung (12) beziehungsweise durch eine an oder auf der Hohlradeinrichtung (12) angebrachte Markierung gebildet wird.

9. Gangwahleinrichtung nach einem oder mehreren der Ansprüche 1 bis 8,
**dadurch gekennzeichnet,**
**dass** die Drehachsen von Sonnenradeinrichtung (8), Planetenradeinrichtung (10) und/oder Hohlradeinrichtung (12) nicht parallel verlaufen, wobei die Sonnenradeinrichtung (8), die Planetenradeinrichtung (10) und/oder die Hohlradeinrichtung (12) eine Schrägverzahnung, eine schraubenförmige Verzahnung oder eine Schneckenverzahnung aufweisen.

10. Gangwahleinrichtung nach Anspruch 1 oder 2,
**dadurch gekennzeichnet,**
**dass** die Übersetzungsvorrichtung als Stirnradgetriebe ausgebildet ist und zumindest ein Stufenrad oder Stufenradsegment aufweist.

11. Gangwahleinrichtung nach Anspruch 10,
**dadurch gekennzeichnet,**
**dass** das Indikatorelement (4) durch ein hohlzylinderförmiges oder hohlzylindersegmentförmiges Bauteil (18) mit stirnseitiger Verzahnung (19) beziehungsweise durch eine daran jeweils angebrachte Markierung gebildet wird.

12. Gangwahleinrichtung nach Anspruch 10 oder 11,
**dadurch gekennzeichnet,**
**dass** das hohlzylinderförmige oder hohlzylindersegmentförmige Bauteil (18) in einer hohlzylinderförmigen oder hohlzylindersegmentförmigen Nut (6) im Gehäuse (2) der Gangwahleinrichtung (1) gelagert ist.

13. Gangwahleinrichtung nach einem der Ansprüche 10 bis 12,
**dadurch gekennzeichnet,**
**dass** das Indikatorelement (4) der Anzeigeeinrichtung (3) in einem zylinder- oder hohlzylinderförmigen und konzentrisch zum Lenker eines Fahrrades befindlichen Bereich anordenbar ist.

## Claims

1. Gear selection device for a gearshift mechanism, in particular for a bicycle gearing, having a control device which acts on the gearshift mechanism by way of a power-transmitting element, an operating device for manual operation of the control device, and a display device having an indicator element, moveable over an arc, for displaying the gearshift position selected by means of the operating device, the angular movements of the operating device or the control device (5) being transmitted to the display device (3) by way of a transmission device, **characterized in that** the indicator element (4) of the display device (3) has a toothing (9, 19), which either in itself, together with a gearwheel of the control device (5), forms the transmission device, or which meshes in a toothing of the transmission device, so that the arc travelled at any time by the indicator element (4) of the display device (3) in relation to a cylindrical, hollow cylindrical or hollow cylinder segmental housing part of the gear selection device is smaller than the arc travelled simultaneously by the operating element of the operating device or the control device (5).

2. Gear selection device according to Claim 1, **characterized in that** the transmission device takes the form of a gear mechanism.

3. Gear selection device according to Claim 1 or 2, **characterized in that** the transmission device takes the form of epicyclic gearing and has at least one sun gear device (8), at least one planet wheel device (10) and at least one internal gear device (12), each gearwheel device comprising at least one gearwheel or a gearwheel segment.

4. Gear selection device according to any one or more of Claims 1 to 3, **characterized in that** the display device (3) is driven by a planet wheel device (10) of the epicyclic gearing.

5. Gear selection device according to any one or more of Claims 1 to 3, **characterized in that** the indicator element (4) of the display device (3) is formed by a planet wheel device (10) or by a continuation or an axis of a planet wheel device (10).

6. Gear selection device according to any one or more of Claims 1 to 5, **characterized in that** at least one bearing face (13) arranged on the end of a planet wheel device (10) can be brought to bear on at least one basically circular segmental bearing face running at right angles to the axis of rotation of the planet wheel device (10), an end bearing face (13) together with a circular segmental bearing face forming a mounting for the planet wheel device (10) in an axial direction.

7. Gear selection device according to any one or more of Claims 1 to 6, **characterized in that** at least one cylindrical step or continuation or an axis (4) of a planet wheel device (10) is capable of running on at least one hollow cylinder segmental bearing face (16) and together with the hollow cylinder segmental bearing face (16) forms a mounting for the planet wheel device (10) in a radial direction.

8. Gear selection device according to any one or more of Claims 1 to 4, **characterized in that** the indicator element (4) is driven by an internal gear device (12) or is formed by an internal gear device (12) or by a marking applied to or on the internal gear device (12).

9. Gear selection device according to any one or more of Claims 1 to 8, **characterized in that** the axes of rotation of the sun gear device (8), the planet wheel device (10) and/or the internal gear device (12) do not run parallel, the sun gear device (8), the planet wheel device (10) and/or the internal gear device (12) having a skew toothing, a helical toothing or a worm toothing.

10. Gear selection device according to Claim 1 or 2, **characterized in that** the transmission device takes the form of a cylindrical-gear mechanism and has at least one step wheel gear or step wheel gear segment.

11. Gear selection device according to Claim 10, **characterized in that** the indicator element (4) is formed by a hollow cylindrical or hollow cylinder segmental component (18) having end face toothing (19) or by a marking applied thereto.

12. Gear selection device according to Claim 10 or 11, **characterized in that** the hollow cylindrical or hollow cylinder segmental component (18) is supported in a hollow cylindrical or hollow cylinder segmental slot (6) in the casing (2) of the gear selection device (1).

13. Gear selection device according to any one of Claims 10 to 12, **characterized in that** the indicator element (4) of the display device (3) can be arranged in a cylindrical or hollow cylindrical area concentric with the handlebar of a bicycle.

## Revendications

1. Dispositif de sélection de vitesse, en particulier pour une transmission de bicyclette, avec un dispositif de commande qui agit sur le changement de vitesse par l'intermédiaire d'un élément de transmission de force, un dispositif d'actionnement pour l'actionnement manuel du dispositif de commande, et un dispositif d'affichage avec un élément d'indicateur mobile le long d'un arc de cercle pour afficher la vitesse sélectionnée au moyen du dispositif d'actionnement, dans lequel les mouvements angulaires sont transmis du dispositif d'actionnement ou du dispositif de commande (5) par un dispositif de transmission au dispositif d'affichage (3), **caractérisé en ce que** l'élément d'indicateur (4) du dispositif d'affichage (3) présente une denture (9, 19), qui soit forme elle-même avec une roue dentée du dispositif de commande (5) le dispositif de transmission, soit engrène avec une denture du dispositif de transmission, de telle façon que l'arc de cercle respectivement parcouru par l'élément d'indicateur (4) du dispositif d'affichage (3) par rapport à une pièce de boîtier en forme de cylindre, de cylindre creux ou de segment de cylindre creux du dispositif de sélection de vitesse soit plus petit que l'arc de cercle parcouru en même temps par l'élément d'actionnement du dispositif d'actionnement ou du dispositif de commande (5).

2. Dispositif de sélection de vitesse selon la revendication 1, **caractérisé en ce que** le dispositif de transmission est une transmission par engrenages.

3. Dispositif de sélection de vitesse selon la revendication 1 ou 2, **caractérisé en ce que** le dispositif de transmission est un engrenage planétaire et présente au moins un dispositif de roue solaire (8), au moins un dispositif de roue planétaire (10) et au moins un dispositif de roue creuse (12), chaque dispositif de roue comprenant au moins chaque fois une roue dentée ou un segment de roue dentée.

4. Dispositif de sélection de vitesse selon une ou plusieurs des revendications 1 à 3, **caractérisé en ce que** le dispositif d'affichage (3) est entraîné par un dispositif de roue planétaire (10) de l'engrenage planétaire.

5. Dispositif de sélection de vitesse selon une ou plusieurs des revendications 1 à 3, **caractérisé en ce que** l'élément d'indicateur (4) du dispositif d'affichage (3) est formé par un dispositif de roue planétaire (10) ou par un prolongement ou un axe d'un dispositif de roue planétaire (10).

6. Dispositif de sélection de vitesse selon une ou plusieurs des revendications 1 à 5, **caractérisé en ce qu'**au moins une face d'appui (13) disposée du côté frontal sur un dispositif de roue planétaire (10) peut être amenée à butée sur au moins une face d'appui sensiblement en forme de segment d'anneau circulaire orientée perpendiculairement à l'axe de rotation du dispositif de roue planétaire (10), une face d'appui frontale (13) formant avec une face d'appui en forme de segment d'anneau circulaire un appui du dispositif de roue planétaire (10) en direction axiale.

7. Dispositif de sélection de vitesse selon une ou plusieurs des revendications 1 à 6, **caractérisé en ce qu'**au moins un retrait ou un prolongement cylindrique ou un axe (4) d'un dispositif de roue planétaire (10) peut rouler sur au moins une face d'appui (16) en forme de segment de cylindre creux et forme avec la face d'appui en forme de segment de cylindre creux (16) un appui du dispositif de roue planétaire (10) en direction radiale.

8. Dispositif de sélection de vitesse selon une ou plusieurs des revendications 1 à 4, **caractérisé en ce que** l'élément d'indicateur (4) est entraîné par un dispositif de roue creuse (12) ou est formé par un dispositif de roue creuse (12) respectivement par une marque apposée sur le dispositif de roue creuse (12).

9. Dispositif de sélection de vitesse selon une ou plusieurs des revendications 1 à 8, **caractérisé en ce que** les axes de rotation du dispositif de roue solaire (8), du dispositif de roue planétaire (10) et/ou du dispositif de roue creuse (12) ne sont pas parallèles, le dispositif de roue solaire (8), le dispositif de roue planétaire (10) et/ou le dispositif de roue creuse (12) présentant une denture oblique, une denture hélicoïdale ou une denture de vis sans fin.

10. Dispositif de sélection de vitesse selon la revendication 1 ou 2, **caractérisé en ce que** le dispositif de transmission est un réducteur à engrenage droit et présente au moins une roue à gradins ou un segment de roue à gradins.

11. Dispositif de sélection de vitesse selon la revendication 10, **caractérisé en ce que** l'élément d'indicateur (4) est formé par une pièce en forme de cylindre creux ou de segment de cylindre creux (18) avec une denture droite (19), respectivement par une marque apposée sur celle-ci.

12. Dispositif de sélection de vitesse selon la revendication 10 ou 11, **caractérisé en ce que** la pièce en forme de cylindre creux ou de segment de cylindre creux (18) est supportée dans une rainure en forme de cylindre creux ou de segment de cylindre creux (6) dans le boîtier (2) du dispositif de sélection de vitesse (1).

13. Dispositif de sélection de vitesse selon l'une quelconque des revendications 10 à 12, **caractérisé en ce que** l'élément d'indicateur (4) du dispositif d'affichage (3) peut être disposé dans une région en forme de cylindre ou de cylindre creux et située concentriquement au guidon d'une bicyclette.
